# EUROPEAN PATENT APPLICATION

(11) **EP 1 879 394 A1**
(43) Date of publication of application: **16.01.2008**
(21) Application number: 06014335.1
(22) Date of filing: 11.07.2006
(51) Int. Cl.: H04N 7/18, H04L 12/18

(54) **Enabling subscribers to video multicast**

(71) Applicant: Nokia Siemens Networks GmbH & Co. KG, 81541 München (DE)
(72) Inventor: Arsenio, Artur, 2775 Carcavelos (PT)
(74) Representative: Fischer, Michael

(57) **Abstract**

The proposed invention provides a method and a system for enabling subscribers to video multicast in a communication network comprising a configuration manager (CM) for managing subscriber configuration profiles, a category based interface (CBI) for category displaying and for allowing dynamic selection of categories by the subscribers (SUBa1, SUBb2, SUBt, SUBr) and a distribution manager (DM) for managing data required for video multicasting among the subscribers (SUBa1, SUBb2, SUBt, SUBr); the invention comprising:
a) initializing the configuration manager (CM) with the subscriber configuration profiles;
b) initializing and updating categories of the category based interface (CBI) when allowed by the subscriber settings contained in the subscriber configuration profiles;
c) requesting the video to be multicast according to a category selection performed on the category based interface (CBI);
d) by the distribution manager (DM), managing the data required for video multicasting session; and
e) multicasting the selected video among transmitting and receiver subscribers (SUBt, SUBr).

## Description

The present invention relates to a method according the preamble of claim 1 and a system according the preamble of claim 9.

Nowadays, TV broadcasting is pervasive, especially for non-mobile receivers. Current technologies for TV broadcasting typically rely on an entity, such as a big broadcasting company, transmitting audio and video (AV) broadcasting signals to a large number of clients. Thanks to the development of broadband mobile telephony, mobile TV, a technology which allows the reception of AV broadcasted signals over mobile receivers, is about to make the reception of AV signals even more pervasive.

Current protocols and technologies for AV signal transmission allow either a point-to-point transmission, e.g. video telephony, video-on-demand and webcasting, or a point-to-multipoint broadcast transmission.

The drawback of point to point transmission methods is that they are not efficient in term of resource utilization since dedicated connections are established between the two endpoints.

On the other hand, the drawback of point to multipoint broadcasting methods is that they require expensive infrastructures so that, typically, can be affordable only for big broadcasting companies.

In multicasting methods, a transmitter is able to transmit AV signals in a manner that resource utilization is more efficiently allocated that in the point-to-point case and in a manner that the required infrastructure is not as expensive as in the broadcasting case.

However a first drawback of current multicast technologies is that it do not allow scalable scenarios. In fact, currently, in video multicasting technologies, the route to the transmitter is fixed and even when a pool of multiple transmitters can be selected, this selection cannot be done in a dynamic way.

Moreover, a second drawback of current multicast technologies is that dynamic selection among multiple transmitters based on their respective geographic location is not allowed.

In addition, a third drawback of current multicast technologies is that dynamic selection among multiple transmitters based on their transmitted content is not allowed.

In fact, current multicast video-conferencing technologies between computers, video cameras and/or mobile are not able to establish live connections based on thematic content or on the location of transmitters and do not allow transmitters to stream to anonymous receivers.

As regards to current near-VoD multicast distribution systems, which allow thematic content selection, the drawback is that the content is typically stored offline in a centralized manner and cannot be stored, live, in a distributed manner at the end subscriber. Moreover, in these systems transmitters cannot act as receivers as well.

It is therefore aim of the present invention to overcome the above mentioned drawbacks, in particular by providing a method and a system for enabling subscribers to video multicast which allows to request, in a dynamic manner, the multicast transmission of video based on selection of content and/or of location of subscribers.

The aforementioned aim is achieved by a method and a system for enabling for enabling subscribers to video multicast in a communication network which comprises a plurality of subscribers having the functionality of transmitting subscribers and of receiving subscribers; the communication network comprising a configuration manager for managing subscriber configuration profiles, a category based interface (CBI) for category displaying and for allowing dynamic selection of categories by the subscribers and a distribution manager for managing data required for video multicasting among the subscribers;
the method comprising the steps of:
a) initializing the configuration manager with the subscriber configuration profiles;
b) initializing and updating categories of the category based interface when allowed by the subscriber settings contained in the subscriber configuration profiles;
c) requesting the video to be multicast according to a category selection performed on the category based interface;
d) by the distribution manager, managing the data required for video multicasting session; and
e) multicasting the selected video among transmitting and receiver subscribers.

In the invention the categories may preferably comprise content and/or location of transmitting subscriber SUBt and/or receiving subscriber SUBr.

In the invention the subscribers configuration profiles may advantageously contain one or more settings selected from the group consisting of:
- settings on the authorization of displaying location of the receiving and/or of the transmitting subscribers within the category based interface;
- settings on preferred contents selected by the receiving and/or of the transmitting subscribers;
- settings on identification names of the receiving and/or of the transmitting subscribers;
- settings on preferences between private or public transmission and/or upon notification for transmitting subscribers;
- settings for authentication and/or authorization of subscribers of the receiving and/or of the transmitting subscribers;
- settings for managing multicasting sessions.

In the invention point c) may preferably be performed either by a transmitting subscriber or by a receiving subscriber.

In the invention the transmitting subscriber may conveniently have the functionality of a receiving subscriber.

The invention may preferably comprise also the updating the category based interface with the location of the receiving subscriber and/or of the transmitting subscriber.

In the invention the transmitting and receiving subscribers may be anonymous.

In the invention the video may contain a live transmission or a recorded transmission.

The proposed invention allows a transmitting subscriber to act as a TV broadcasting entity, thus creating an "anyone/anywhere TV" technology.

The proposed invention enables a distributed solution for TV, in which every subscriber may be a potential multicasting entity and may be an end-receiver for others transmissions.

For example, anyone "can watch" TV transmitted from anywhere by anyone, anywhere it happens to be. For instance, a mobile phone user at the base of the Eiffel Tower, before going up, checks the view from the top transmitted by another mobile phone user, after search and selection in a web portal. In a similar way, a user at home, in a distant country, might as well receive the same view being multicast by choosing it from the web portal.

Hence, with the proposed invention, contents, instead of being dominated by few big broadcasting companies, may be distributed over all subscribers who own a transmitter/receiver device.

The proposed invention empowers the receiving end-users to select live and recorded AV data streaming among a very large offer and the transmitting end user to have a very large audience.

The proposed solution may have several disruptive impacts on some industries. For example, in the cinema industry, movie fans may view, with the proposed invention, movies while they are being produced. In addition, the proposed invention may boost audiences for amateur movie makers.

In the news and media industry, the proposed invention may lead to the end of the oligopoly of a limited number of broadcasting companies. In fact, in case of a major public event, any receiver may be able to have on-line access to AV transmission from anyone, present at this event, having an appropriate transmitter device, the major event being, for example, an earthquake or a war.

Moreover, the proposed invention makes it more difficult to manipulate news since the audience is able to access to several points of view of the several parties present in such a major public event.

In the security industry, more flexibility may be achieved by having a security monitor to request access to the devices of people moving around a facility - getting therefore different points of view. This would be especially useful for high security scenarios, e.g. for people protection in public speeches or for banks.

The proposed solution may have several disruptive impacts since the today's commercial TV channels will have to compete with thousands or millions of private/public channels with the replacement of public TV long video broadcastings by short private multicast live or pre-recorded videos.

Furthermore, the proposed invention reduces significantly the impact of power consumption suffered by current mobile TV strategies since typical video transmissions are shorter than the ones of movies and TV series.

The invention will now be described in preferred but not exclusive embodiments with reference to the accompanying drawings, wherein:
- Figure 1: is a block diagram schematically illustrating a network architecture in an example embodiment according to the present invention;
- Figure 2: is a message sequence schematically illustrating the messaging scenario of requesting video multicasting by a receiving subscriber based on the location of the transmitting subscriber according to another example embodiment of the present invention;
- Figure 3: is a block diagram schematically illustrating the messaging scenario of requesting video multicasting by a transmitting subscriber according to a further example embodiment of the present invention.

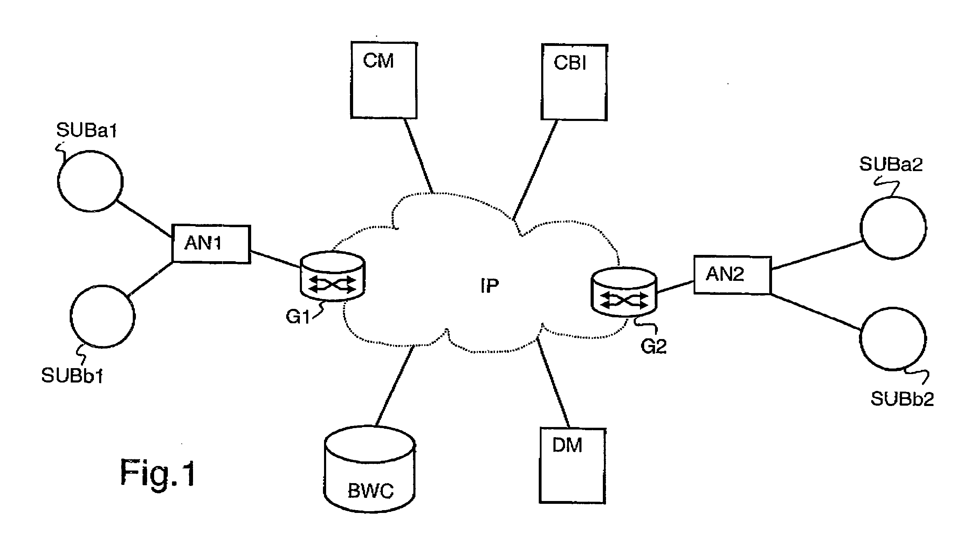

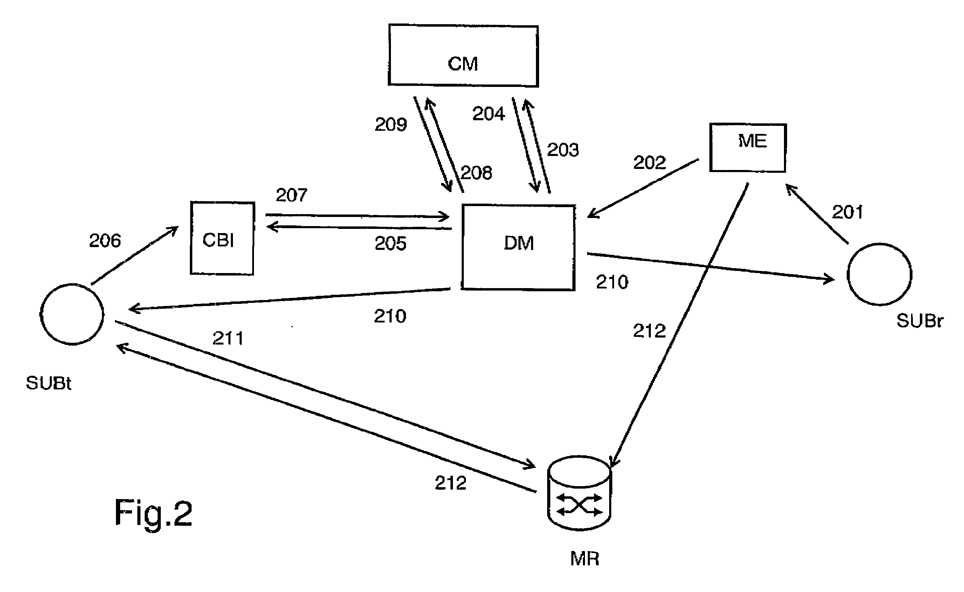

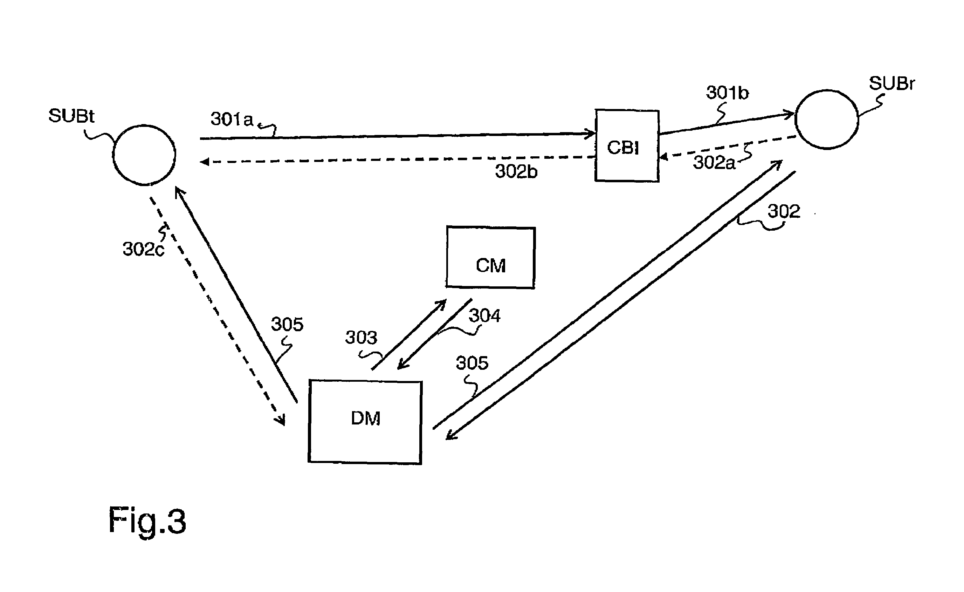

Figure 1 shows an architecture of a communication network in an example embodiment according to the present invention. Each of subscribers SUBa1, SUBb1, SUBa2, SUBb2 may have the functionality of a transmitting subscriber and/or of a receiving subscriber (see, for example, transmitting subscribers SUBt and receiving subscribers SUBr of Figure 2 and 3). The subscribers SUBa1, SUBb1, SUBa2, SUBb2 are connected to their local relevant access network devices AN1, AN2.

More in particular, the access network devices AN1, AN2 may be fixed access devices, e.g. DSLAMs, or mobile radio access devices, e.g. UTRANs, or any other type of datacom access device. As a consequence, the subscribers SUBa1, SuBb1, SUBa2, SUBb2, associated to the fixed and/or mobile access networks AN1, AN2, may be fixed end-user devices, e.g. PCs, IP-TVs, video-phones, or may be mobile end-user devices, e.g. 3G phones or PDAs. The access network devices AN1, AN2 are connected to an IP network via IP edge gateways G1, G2. Examples of edge gateways G1, G2 may be edge routers, BRASs, OLTs for EPON access networks and similar devices.

A resource bandwidth controller BWC may be present for managing the bandwidth allocation of network resources so as to guarantee certain levels of QoS.

In the context of this invention, the term video is to be intended as including, when applicable, also an audio component.

According to the architecture of the present invention, three technical components or modules are provided for enabling subscribers to video multicast.

The first module is a configuration manager CM for managing configuration profiles of subscribers SUBa1, SUBb2, SUBt, SUEr.

The second module is a category based interface CBI for displaying categories such as thematic content and geographical subscriber locations and for allowing dynamic selection of categories by the subscribers SUBa1, SUBb2, SUBt, SUBr.

The third component is a distribution manager DM for managing the required data for video multicasting among the subscribers SUBa1, SUBb2, SUBt, SUBr.

The configuration manager CM is a module which keeps track of user authentication/authorization issues, as well as user configuration settings in a database. The configuration manager CM contains profiles for transmitting and receiving subscribers SUBa1, SUBb2, SUBt, SUBr. In fact, for example, a transmitting subscriber SUBt may, for security reasons, require acknowledging transmission before starting any type of video transmission. The configuration manager CM uses the configured profiles to authorize and authenticate the subscribers requesting SUBa1, SUBb2, SUBt, SUBr to receive or transmit in video multicast.

Settings contained in the configuration profiles of the configuration manager CM may include one or more of the following subscriber options:
- the subscribers SUBr, SUBt may decide if their geographical locations should be displayed in on a sub-tree of a place field contained in the category based interface CBI;
- the subscribers SU3r, SUBt may decide which thematic groups or contents they are interested as transmitter or as a receiver;
- the transmitting subscriber SUBt may decide whether its transmissions should be kept private or whether it should be public or selected upon notification;
- the subscriber SUBt, SUBr may decide whether to be identified by user name, or whether to remain anonymous or to be identified by a nickname in each thematic group, user subscriber information, among others.

The configuration manager CM may advantageously contain information regarding ongoing multicasting sessions.

The category based interface acts as a dynamic interface for the subscribers SUBr, SUBt, displaying, dynamically, the locations of subscribers SUBr, SUBt and the different types of available thematic contents.

For the receivers SUBr, this interface module CBI comprises a dynamic user interface displaying several links to several transmitters SUEt, which may be themselves receivers SUbr. For the transmitting subscribers SUBT, the category based interface CBI may comprise links to groups, location or thematic content preferred by other receiving subscribers SUBr. The category based interface is dynamic in that the information concerning the links change dynamically, e.g. if a subscriber moves from a first position to a second position, a search for a location according to the first position does not retrieve the subscriber anymore.

The category based interface may be implemented as a webportal, e.g. an HTML and/or WAP portal, having several hyperlinked pages that may be stored in a server,

The user interface of the category based interface CBI may be located at the subscriber SUBr, SUBt or, more efficiently at the back-end of the communication network. In case it is located at the subscriber device SUBt, SUBr, the information of the user interface should be periodically or, upon request, updated.

The links of the category based interface CBI may be preferably organized according to thematic content to allow the selection of subscribers SUBt, SUBr based on preferences. An exemplary webpage of the webportal may contain a search window for searching subscribers by name, location or content and a list of links such as "place", "content", "contact name" and "group". Each of the above mentioned links may be expanded, e.g. "place" may be expanded to "country", "province", "city", "site", "content" may be expanded to "news", "movies", "discovery channel" and "group" can be expanded to "tourism", "gardening", "cooking", "war-scenarios". The exemplary webpage may, conveniently, include advertising sections. In further embodiments of the present invention, advertising videos may be sent to receivers SUBr by the service provider before the starting of a multicast session with a selected transmitter SUBt.

In a further embodiment of the present invention, the user interface of the category based interface CBI may be implemented by using other displaying technologies than a webportal or a webserver. For example, in order to facilitate the selection of subscriber locations, a dynamically updated geographical map may be provided, e.g. GoogleEarth, a visual map tool, may be used as CBI by adding a new feature to it, the dynamic update of information on the map.

The category based interface CBI is a dynamic interface since subscribers SUBa1, SUBb2 may have .dynamic behaviors, i.e. they may change location and/or they may change their preferences in terms of thematic content.

Hence, the web pages need to be dynamically updated to account for new registering subscriber SUBa1, subscribers SUBa1 going off-line or subscribers SUBa1 updating their configuration settings.
Several options may be available for this update, e.g. an updated every 15 minutes for all updates or an updated every 30 minutes only for updates which do not result from new subscriber configuration settings.

The receiving subscriber SUBr may receive video from multiple transmitting subscribers SUBt, for example, by selecting certain transmitters SUBt, by adding them to a receiver cart, and then, by sending, a request to all of them to start a video transmission.

The transmitting subscriber SUBt may browse the user interface pages, select a receiver SUBr, for example, by adding it to a receiver cart, and then, by sending a request to the selected receiving subscriber SUBr to acknowledge to receive the video transmission.

The category based interface CBI may either be one interface having different sections targeting either receiving or transmitting subscribers SUBr, SUBt and/or may comprise two separate category based interfaces CBI, one for performing subscriber selection and another one for performing subscriber registration.

The distribution manager DM is a component that manages the required data for video multicast, playing an essential role for coordinating the different message flows, and for establishing the multicast sessions.

The distribution manager DM is responsible for subscriber authentication performed by accessing the user database on the configuration manager CM. Subscriber authentication may be performed either on the category manager CM or on the distribution manager DM by accessing data stored on the category manager CM.

In addition, the distribution manager DM communicates with the configuration manager CM for queries, postings or updates of the subscriber configuration settings.
The distribution manager DM is notified about transmitter presences and their locations and, in turn, it notifies, to the configuration based interface CBI, about the newly registered transmitting subscribers SUBt and/or about the new subscriber configuration settings.

In addition, the distribution manager DM is notified about selections performed on the configuration based interface CBI in order to initiate video transmissions.

To obtain video multicast transmission, several multicast mechanisms may be implemented. Some examples of multicast mechanisms are IP multicast, Multimedia Broadcast Multicast Service (MBMS) and peer to peer multicast

In general, the distribution manager DM manages video multicasting by synchronizing the transmitting and the receiving subscribers SUBt, SUBr and by managing the multicast information details required by them.

In particular, in case of IP multicast, the distribution manager DM dynamically requests a multicast IP address to begin a multicast session, from an IGMP multicast router MR, in order to transmit this IP address to the transmitter and receiver SUBr, SUEt.

Instead, in case of peer to peer multicast, the distribution manager DM provides a set of indexes to the transmitting subscribers SUBt and the multicast router MR is a set of peer to peer machines. In a peer-to-peer multicast mechanism, the functionality of the IP multicast router MR is obtained by devices located in the access networks, e.g. within mobile devices and/or within set-top boxes, but it may as well be located at the core network, e.g. in a cluster of machines at a service provider backend. In MBMS mechanism, the functionality of the IP multicast router MR may be represented by a different device in accordance with the specific multicast mechanism requirements.

The distribution manager DM may be located in one server or may be distributed among a plurality of servers, depending on the architecture of the communication network.

Transmitting and receiving subscribers SUBt, SUBr are intelligent devices. This means that the subscribers SUBt, SUBr can be programmed with simple logics or with software application in order to be able to reply to notifications, to start transmission or to display the received videos. These software applications may be downloaded from the internet or may be built in within the subscriber terminal devices SUBr, SuBt. Upon convenience, processing requirements of such software applications may be kept minimal.

Figure 2 is a message sequence schematically illustrating the messaging scenario of requesting video IP multicasting by a receiving subscriber SUBr based on the location of the transmitting subscriber SUBt according to a further example embodiment of the present invention.

Figure 2 shows the transmitter SUBt, which in this embodiment is a mobile device, and a receiving subscribers SUBr, interacting in a video transmitting scenario.

The initial exchanged messages, messages 201 to 205, concern the updates of the configuration based interface CBI and the automatic detection of the transmitting subscriber location. The remaining messages, messages 206 to 212, concern the establishment of a video transmission upon receiving subscriber selection.

In message 201, sent from the transmitting subscriber SUBt to a mobile operator equipment ME via an access network (not shown), the subscriber location is detected by a radio base point (not shown), upon entering a cell or upon switching on the mobile device. The information about the transmitting subscriber location is stored so that a Mobile Telephone Switching Office located within the mobile operator equipment ME may notify, upon request, the location of a given transmitter SUBt.

Information on transmitter presence and location may be received, by the distribution manager DM, from the radio base station through the Mobile Telephone Switching Office and may be communicated to the distribution manager DM. Alternatively the same information may be received, by the distribution manager DM, from the transmitter SUBt either via an automatic device, e.g. a GPS, or via manual intervention by the transmitting subscriber SUBt itself. Information on transmitter presence may be automatically notified to the distribution manager DM or alternatively may be obtained by the distribution manager upon request.

In case the transmitter SUBt is a fixed type of device it is typically the role of the DSLAM access device AN1, AN2 to notify about transmitter presence/location. Alternatively, similarly as in the mobile subscriber case, it is the fixed transmitter SUBt that directly informs the distribution manager DM about its presence/location.

In message 202, sent from the mobile operator equipment ME to the distribution manager DM, the distribution manager DM is notified, at the purpose of enabling selection according to location, of the transmitting subscriber location.

In messages 203 and 204, exchanged between the distribution manager DM and the configuration manager CM, the distribution manager DM requests and obtains transmitting subscriber settings, such as for example the following settings:
- if the transmitting subscriber SUBt allows public multicast; in case the transmitting subscriber SUBt allows only private unicast, then only one receiving subscriber is entitled to join in one unicast session with the transmitting subscriber SUBt;
- if the transmitting subscriber SUBt requires a notification before its location is displayed on the user interface of the category based interface CBI;

Filters may be advantageously used to remove receiving subscriber addresses from the video transmission sessions, or, for the system, to accept receiving subscribers SUBr belonging to a given subset.

In message 205, sent from the distribution manager DM to the category based interface CBI, the transmitting subscriber settings, having the necessary permissions, are sent. In addition, also the category based interface CBI may request the distribution manager DM for updates.

In message 206, sent from the receiving subscriber SUBr to the category based interface CBI, the receiving subscriber SUBr browses the user interface hyperlinks searching for video content.

In message 207, sent from the configuration based interface CBI to the distribution manager DM, after the receiving subscriber SUBr has selected a transmitting subscriber SUBt, the configuration based interface CBI sends a message with the IP address of the receiver SUBr and the ID of the selected transmitting subscriber SUBr to the distribution manager DM.

In message 208, sent from the distribution manager DM to the configuration manager CM, the distribution manager DM checks on the configuration manager database the authorization permissions of the receiving subscriber SUBr. In addition, in message 208, the distribution manager DM also requests the IP address of the transmitting subscriber by using its ID.

In message 209, sent from the configuration manager CM to the distribution manager DM, the data manager DM receives the transmitter IP address if the receiving subscriber SUBr has the necessary authorizations.

In messages 210, sent from the data manager DM to the receiving and transmitting subscriber SUBr, SUBt, the data manager DM gives the necessary information so that the receiving subscriber SUBr is able to join a video multicast session. In IP multicast, in case the transmitting subscriber SUBt is inactive, i.e, it is not yet transmitting, the data manager dynamically allocates an IP multicast address. Otherwise, in case an IP video multicast session is already open, the data manager selects the IP multicast address being used by the transmitting subscriber SUBt. Several multicast protocols may be used, among them a preferred one is Sparse-mode Protocol-Independent Multicast (PIM). The data manager DM sends the IP multicast address to both the receiving and the transmitting subscriber SUBr, SUBt. For security reasons, the transmitter SUBt may be required to trigger the start of video transmission. When messages are exchanged among mobile devices several message protocols may be used, e.g. SMS, SMTP for e-mails and so on, independently on the mobile phone system generation, e.g. GSM, GPRS, EDGE, UMTS.

In message 211, sent from the receiving subscriber SUBr to the IGMP multicast router MR, the receiving subscriber SUBr sends an "IGMP join" message to this multicast group. Then, the IGMP multicast router MR allows the multicast signal to be passed on to the receiving subscriber SUBr.

In message 212, sent from the IGMP multicast router MR to the receiving subscriber SUBr, video multicast is transmitted to the receiving subscriber SUBr. The transmitting subscriber SUBr sends video with its IP address as the source address, and the IP multicast address as the destination address in the multicast datagram.

The messaging sequence illustrated in the example embodiment of Figure 2 shows a case of video transmission scenario. In an initialization scenario, in which subscriber configuration profiles are initialized and/or updated, messages may be exchanged also directly between the category based interface CBI and the configuration manager CM,

The skilled in the art easily understands that the configuration manager CM, the distribution manager DM and the category based interface CBI may not need to be located in separate servers, as shown in Figure 2, but, instead, may be compressed in one or two servers.

In a further embodiment of the present invention, an alternative scenario than the one describer in Figure 2 may be implemented, in which it is the receiving subscribers SUBr that notifies the IP multicast address to the transmitter SUBt.

However, other multicast schemes besides IP multicast could be used. The distribution manager DM might send the same multicast address to one or several transmitters, therefore optimizing network resources. Indeed, multicast groups will be created and destroyed-very often. Users leave groups with IGMPv2 leave messages; when the last user leaves, transmission stops. Hence, it will be necessary to continuously reallocate multicast addresses. The bandwidth controller BWC may be used to guide the number of transmitters SUBt assigned to a given multicast address by the distribution manager DM, so that multicast addresses over low bandwidth links will support few transmitters SUBt. The distribution manager DM may initially have a set of multicast addresses reserved for it - the Internet Assigned Numbers Authority (IANA) controls the assignment of IP multicast addresses (class D address space - all IP multicast group addresses will fall in the range of 224.0.0.0 to 239.255.255.255).

The distribution manager DM may as well request a multicast address allocated dynamically from a MADCAP (Multicast Address Dynamic Client Allocation Protocol) server (this concept is very similar to the way DHCP works) .
In a further embodiment of the present invention, a receiver SUBr may get video streams from multiple transmitters SUBt, displayed each with smaller resolution.

In a further embodiment of the present invention, video multicast may be combined with unicast for optimal video distribution. This embodiment may be useful in case the transmitting subscribers SUBt are located in a foreign country and, advantageously, all data stream may be sent first in unicast to a video server, which, in turn, multicasts the video data. This same scenario may be used within borders to overcome the problems of networks not supporting IGMP. As international operators adopt ATV, and more networks have IGMP enabled routers, this process might become obsolete. In such a scenario, the distribution manager DM sends, to the transmitter SUBt, the video server IP address and not the IP multicast address. The IP addressed of the transmitter and of the multicast are both sent to the video server by the distribution manager DM. Upon packet arrival, the video server checks the source, and replaces the destination address in the packet with the correspondent multicast address, and sends the packet through IGMP enabled routers MR.

Figure 3 is a block illustrating the messaging sequence in which video multicasting is triggered by a transmitting subscriber SUBt in a further example embodiment of the present invention. Figure 3 illustrates a scenario embodiment in which the transmitter SUBt triggers the selection process as well, by interfacing with the category based interface CBI and by selecting potential multiple receivers SUBr from among a set of registered ones.

In messages 301a and 301b, sent from the transmitting subscriber SUBt to the receiver SUBr through the category based interface CBI, after the transmitter SUBt has selected from a webpage of the category based interface CBI the receiver SUBr, the receiver SUBr is notified about the transmitter intent and about its IP address.

In message 302, sent from the receiver SUBr to the distribution manager DM, the receiver SUBr notifies to the distribution manager DM about the IP addresses of receiver and transmitter SUBr, SUBt.

Alternatively, in messages 302a and 302b, the receiver SUBr may send, through the configuration based interface CBI, a message to the transmitter SUBt containing its IP address. Then, the transmitter SUBt may send a message 302c to the distribution manager DM containing the IP addresses of receiver and transmitter SUBr, SUEt.

In a further embodiment of the present invention, the communication between the transmitter SUBt and the receiver SUBr, represented in the previous embodiment by messages 301a, 301b, 302a, 302b, may be direct between the transmitter SUBt and the receiver SUBr themselves without requiring that messages are passing through the category based interface CBI.

In messages 303 and 304, exchanged between the distribution manager DM and the configuration manager CM, the distribution manager DM requests and obtains from the configuration manager CM for receiver subscriber information.

In message 305, sent from the distribution manager DM to the transmitter SUBt, the distribution manager DM, in case the transmitter SUBt is inactive, dynamically creates an IP multicast address and sends it to both the receiver and the transmitter SUBr, SUBt.

In subsequent messages, not shown, the receiver SUBr sends an "IGMP join" message to the multicast group and video multicast transmission takes place.

In a further embodiment of the present invention, recorded video content stored at the end user device may be transmitted, the recorded video content being stored in a distributed manner over a multitude of end-user devices. Preferably, in the configuration based interface CBI, non-live content is marked in a different way than live content.

The skilled in the art easily understands that the communication networks may include public and private networks, fixed and mobile networks, and the convergence between them.

### List of reference signs

- 201 to 212: exchanged messages
- 301 to 305: exchanged messages
- AN1, AN2: access network, access network devices
- BWC: bandwidth resource controller
- CBI: category based interface
- CM: configuration manager
- DM: distribution manager
- ME: mobile operator equipment
- MR: IGMP multicast router, multicast router
- G1, G1: edge gateway, edge router
- SUBa1, SUBa2: subscribers
- SUBb1, SUEb2: subscribers
- SUBr: receiving subscriber, receiver
- SUBt: transmitting subscriber, transmitter

### List of used acronyms

- 3G: Third Generation
- AV: Audio & Video
- BRAS: Broadband Remote Access Server
- DSLAM: Digital Subscriber Line Access Multiplexer
- EDGE: Enhanced Data Rates for GSM Evolution
- EPON: Ethernet Passive Optical Networks
- GPRS: General Packet Radio Service
- GSM: Global System for Mobile Communications
- IGMP: Internet Group Management Protocol
- ID: Identification
- IP: Internet Protocol
- IP-TV: Internet Protocol Television
- JSP: Java Server Page
- MBMS: Multimedia Broadcast Multicast Service
- OLT: Optical Line Termination
- PC: Personal Computer
- PDA: Personal Digital Assistant
- PIM: Protocol-Independent Multicast
- QoS: Quality of Service
- SMS: Short message service
- SMTP: Simple Mail Transfer Protocol
- UMTS: Universal Mobile Telecommunications System
- UTRAN: UMTS Radio Access Network
- VoD: Video on Demand
- WAN: Wide Area Network

## Claims

1. A method for enabling subscribers to video multicast in a communication network which comprises a plurality of subscribers (SUBa1, SUBb2, SUBt, SUBr) having the functionality of transmitting subscribers (SUBt) and of receiving subscribers (SUBr);
said communication network comprising a configuration manager (CM) for managing subscriber configuration profiles, a category based interface (CBI) for category displaying and for allowing dynamic selection of categories by the subscribers (SUBa1, SUBb2, SUBt, SUBr) and a distribution manager (DM) for managing data required for video multicasting among the subscribers (SUBa1, SUBb2, SUBt, SUBr);
said method comprising the steps of:
a) initializing the configuration manager (CM) with the subscriber configuration profiles;
b) initializing and updating categories of the category based interface (CBI) when allowed by the subscriber settings contained in the subscriber configuration profiles;
c) requesting the video to be multicast according to a category selection performed on the category based interface (CBI) ;
d) by the distribution manager (DM), managing the data required for video multicasting session; and
e) multicasting the selected video among transmitting and receiver subscribers (SUBt, SUBr).

2. The method according to claim 1, wherein said categories comprise content and/or location of transmitting subscriber (SUBt) and/or receiving subscriber (SUBr).

3. The method according to any of the preceding claims, wherein said subscribers configuration profiles contain one or more settings selected from the group consisting of:
- settings on the authorization of displaying location of the receiving and/or of the transmitting subscribers (SUBa1, SUBb2, SUBt, SUBr) within the category based interface (CBI);
- settings on preferred contents selected by the receiving and/or of the transmitting subscribers (SUBa1, SUBb2, SUBt, SUBr) ;
- settings on identification names of the receiving and/or of the transmitting subscribers (SUBa1 SUBb2, SUBt, SUEr);
- settings on preferences between private or public transmission and/or upon notification for transmitting subscribers (SUBt);
- settings for authentication and/or authorization of subscribers (SUBa1, SUBb2, SUBt, SUBr) of the receiving and/or of the transmitting subscribers (SUBa1 SUBb2, SUBt, SUBr);
- settings for managing multicasting sessions.

4. The method according to any of the preceding claims, wherein said step c) is performed either by a transmitting subscriber (SUBt) or by a receiving subscriber (SUBr).

5. The method according to any of the preceding claims, wherein the transmitting subscriber (SUBt) has the functionality of a receiving subscriber (SUBr).

6. The method according to any of the preceding claims, further comprising the step of updating the category based interface (CBI) with the location of the receiving subscriber (SUBr) and/or of the transmitting subscriber (SUBt).

7. The method according to any of the preceding claims, wherein the transmitting subscriber (SUBt) is anonymous and/or the receiving subscriber (SUBr) is anonymous.

8. The method according to any of the preceding claims, wherein the video contains a live transmission or a recorded transmission.

9. A system having means for performing the steps of the method according to any of the claims 1 to 8.
